# EUROPÄISCHE PATENTSCHRIFT

(11) **EP 0 389 518 B1**
(45) Veröffentlichungstag und Bekanntmachung des Hinweises auf die Patenterteilung: **14.04.1993**
(21) Anmeldenummer: 88909745.7
(22) Anmeldetag: 12.11.1988
(51) Int. Cl.: F16H 57/00, B60K 25/00

(54) **PUMPENANORDNUNG IN EINEM GETRIEBE**
PUMP ARRANGEMENT FOR A GEARBOX
AGENCEMENT DE POMPE POUR BOITES DE VITESSES

(30) Priorität: 17.11.1987 DE 3738990
(43) Veröffentlichungstag der Anmeldung: 03.10.1990
(73) Patentinhaber: ZF FRIEDRICHSHAFEN Aktiengesellschaft, 88038 Friedrichshafen (DE)
(72) Erfinder: HERLITZEK, Werner, D-799O Friedrichshafen (DE)
(86) Internationale Anmeldenummer: EP8801033
(87) Internationale Veröffentlichungsnummer: WO8904930

(56) Entgegenhaltungen:
- EP-A- 0 045 864
- EP-A- 0 076 388
- DE-A- 2 529 248
- DE-A- 3 513 217
- US-A- 3 309 934
- US-A- 4 650 398
- ZF-Hydromedia-Wendegetriebe, F43075/RT3240-678, ZF Zahnradfabrik Passau GmbH

## Beschreibung

Die Erfindung bezieht sich auf eine Pumpenanordnung in einem Getriebe, in welches eine Pumpe eingebaut und ein Anschlußteil für einen Nebenabtrieb vorhanden ist. Die Pumpe und das Anschlußteil laufen mit einer gemeinsamen Antriebswelle um. Für das Anschlußteil und das freie Ende der Antriebswelle ist ein gemeinsames Lager vorgesehen. Dieses ist, zusammen mit dem Anschlußteil, von einem Gehäusedeckel des Getriebes fixiert.

Aus der DE-A-25 29 248 ist ein Getriebe mit den vorstehend aufgeführten Merkmalen bekanntgeworden. Der Nachteil dieser Anordnung besteht vor allem darin, daß die Pumpe im Inneren des Getriebes relativ schwer zugänglich angeordnet ist. Die bekannte Konstruktion erfordert ferner ein gesondertes Mittenlager für die Pumpe. Die erforderlichen Ölkanäle sind in Zwischenwänden untergebracht, was bei den Gußformen für das Getriebegehäuse besonders berücksichtigt werden muß.

Der vorliegenden Erfindung liegt die Aufgabe zugrunde, die Pumpe bei einem Getriebe der eingangs genannten Art so auszubilden und anzuordnen, daß ihre Montage einfach möglich ist. Die Gestaltung des Getriebegehäuses soll vereinfacht und die Schwingungsdämpfung verbessert werden.

Die der Erfindung zugrunde liegende Aufgabe wird dadurch gelöst, daß das Anschlußteil sowohl für die Mitnahme des Nebenabtriebs als auch des Pumpenrotors eingerichtet ist. Gehäuseseitig sind das Anschlußteil und der Pumpenrotor von einem Pumpenstator umgeben. Der Pumpenstator ist dicht in eine Gehäusewandöffnung des Getriebes eingepaßt und weist einen Lagerhals auf, der das Lager trägt. Die Zu- und Ableitungen treten unmittelbar radial in die die Gehäusewandöffnung umgebende Gehäusewand über. Der Gehäusedeckel weist eine Mittenöffnung für das Anschlußteil auf und überdeckt zudem den Pumpenstator auf der abtriebsseitigen Stirnseite.

Mit den vorstehend aufgeführten Merkmalen wird erreicht, daß sich die Pumpe in Kombination mit dem Nebenabtrieb über ein Hauptlager der Antriebswelle an einer äußeren Wand des Getriebegehäuses abstützt. Die in dieser Wand eingegossenen Kanäle tragen zur weiteren Schwingungsdämpfung bei. Die komplette Pumpe kann ohne weiteres nach Lösen einer Flanschverbindung und einer Zentralschraube schnell und einfach mitsamt dem Wellenlager ausgetauscht werden. Dabei ist auch günstig, daß der Pumpenrotor auf dem Anschlußteil ein eigenes Lager hat, das ebenfalls demontierbar ist. Ferner ist vorteilhaft, daß der Pumpenstator unmittelbar in die Gehäusewandöffnung dicht eingesetzt ist. Gesonderte Abstützrippen im Getriebegehäuse sind somit nicht erforderlich.

Mit der vorgeschlagenen Anordnung kann in der Regel auf eine weitere, mittige Lagerung der Antriebswelle im Inneren des Getriebegehäuses verzichtet werden.

Es ist vorteilhaft, das Anschlußteil abtriebsseitig über ein weiteres Lager am Gehäusedeckel abzustützen. Die Nebenabtriebswelle kann bei Bedarf einfach eingesteckt und der Pumpenrotor besonders einfach durch den Gehäusedeckel axial fixiert werden. Das Lager ist von außen leicht kontrollierbar.

Eine einfache Abdichtung des Gehäusedeckels in der Gehäusewandöffnung besteht in der Verwendung von Radialdichtungen.

Es besteht ferner die Möglichkeit, den Pumpenstator über Axialdichtungen gegen den Gehäusedeckel abzudichten.

Eine besonders einfache Anschlußmöglichkeit für den Nebenabtrieb besteht darin, das Anschlußteil als Hohlwelle mit einem einen Pumpenrotor mitnehmenden Außenprofil und einem dem Nebenabtrieb zugeordneten Innenprofil auszubilden. Dieses Innenprofil befindet sich antriebsseitig mit einem Außenprofil auf dem freien Ende der Antriebswelle im Eingriff. Somit kann die Nebenabtriebswelle bei Bedarf einfach eingesteckt werden.

Das Anschlußteil ist in einfacher Weise durch eine lösbare Axialabstützung sowohl gegenüber der Antriebswelle als auch gegenüber dem antriebsseitig vorgeordneten Lager festgelegt.

Die Montage gestaltet sich besonders einfach, wenn der Pumpenstator axial am Gehäusedeckel befestigt ist, so daß nach dem Lösen dieses Gehäusedeckels von der Gehäusewand und nach dem Entfernen der Axialabstützung des Anschlußteils dieses zusammen mit dem Pumpenrotor, dem Pumpenstator und dem Lager vom freien Ende der Antriebswelle abgezogen und aus der Gehäusewandöffnung unzerlegt herausgezogen werden kann.

Ein Ausführungsbeispiel der Erfindung wird im folgenden anhand der Zeichnungen näher erläutert.

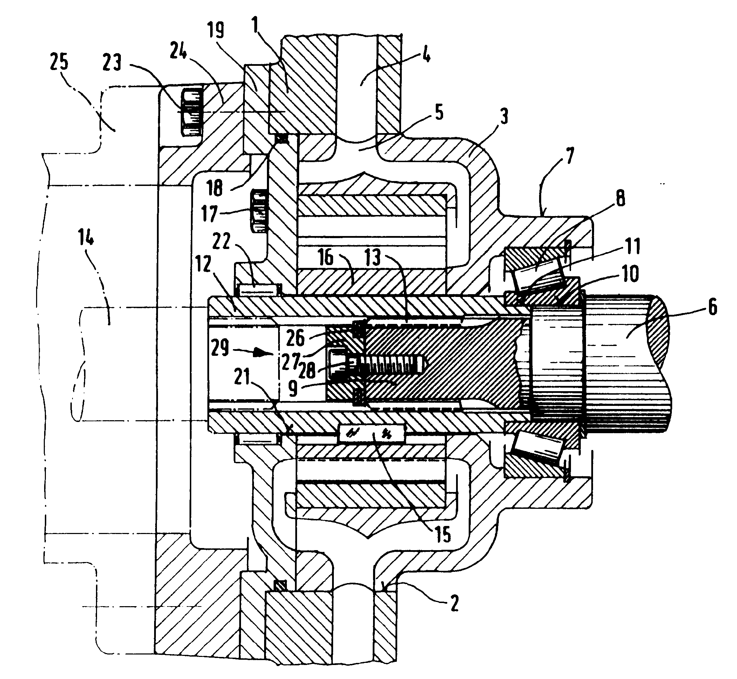

In der Figur ist eine Gehäusewand 1 mit einer Gehäusewandöffnung 2 versehen, welche groß genug ist, um einen von außen eingeschobenen Pumpenstator 3 dichtend zu umschließen. In die Gehäusewand 1 sind Ölkanäle 4 eingearbeitet, in welche entsprechende Anschlüsse 5 des Pumpenstators 3 münden. Dieser wird in seiner Längsachse durchdrungen von einer gemeinsamen Antriebswelle 6, die er mittels eines in einem getriebeseitigen Lagerhals 7 festgelegten Lagers 8 führt. Dasselbe ist mit seinem Innenring sowohl auf einem zum freien Ende 9 hin offenen Ringbund 10 der Antriebswelle 6 als auch auf einem zur Antriebswelle 6 hin offenen Ringbund 11 eines hohlwellenartigen Anschlußteils 12 radial abgestützt, welches zur Antriebswelle 6 drehfest ist über eine Vielzahn-Profilverbindung 13, in deren außenseitigem offenen Ende im Bedarfsfalle ein Nebenabtrieb 14 einsteckbar ist. Das Anschlußteil 12 hat auf seiner Außenseite ebenfalls ein Mitnahmeprofil 15 bzw. im vorliegenden Beispiel eine Keilverbindung, die einen dem Pumpenstator 3 angepaßten Pumpenrotor 16 in Drehrichtung mitzunehmen vermag. Der Pumpenstator 3 ist abtriebsseitig durch Halteschrauben 17 an einem ebenfalls kolbenartig in die Gehäusewand 1 eingeschobenen und hier z. B. mittels O- oder Kolbenringen 18 eingedichteten Gehäusedeckel 19 befestigt. Es können statt der Radialdichtungen auch Flachdichtungen zum Gehäusedeckel vorgesehen werden. Der Gehäusedeckel liegt auch axial dicht an der abtriebsseitig offenen Stirnseite des Pumpenstators 3 an und hat eine Mittenöffnung 21, durch welche das Anschlußteil 12 für den Nebenabtrieb 14 abtriebsseitig hervorragt. In der Mittenöffnung 21 ist ein Lager 22 vorgesehen, welches vorzugsweise als Nadellager gestaltet und ebenfalls von außen gut kontrollierbar ist.

Der Gehäusedeckel 19 ist von außen her auf einer bearbeiteten Fläche der Gehäusewand 1 mittels mehrerer Halteschrauben 23 befestigt, die, je nach Anwendungsfall, zusätzlich noch einen Zwischenflansch 24 mittragen können, der zur Aufnahme eines vom Nebenabtrieb 14 antreibbaren weiteren Aggregats 25 (Pumpe, Winde oder dergleichen) oder aber als unabhängig vom Pumpenstator 3 lösbarer Verschlußdeckel der Gehäusewandöffnung 2 eingerichtet ist. Wird durch den Nebenabtrieb 14 eine weitere Ölpumpe betrieben, bedarf es keiner besonderen Abdichtung aus dem Pumpenstator 3 innerhalb der Gehäusewand 1.

Die Axialabstützung 29 des Anschlußteiles 12 gegenüber dem freien Wellenende 9 ist mittels Seeger-Ringen 26 und einer Gegenscheibe 27, die durch eine Zentralschraube 28 gehaltert ist, gelöst.

Einige Seeger-Ringe 26 sind dabei in eine Innenringnut im Innenprofil 13 des Anschlußteiles 12 so eingelassen, daß sie auch an der abtriebsseitigen Vorderkante des freien Endes 9 anliegen. Zu ihrer Verstärkung wurde eine durch die Zentralschraube 28 in der Antriebswelle 6 gehalterte Gegenscheibe 27 über den Seeger-Ringen 26 vorgesehen.

Um einen Ausbau der Pumpe 3, 16 und/oder des Lagers 8 vornehmen zu können, brauchen bei der erfindungsgemäßen Konstruktion nur noch die Halteschrauben 23 sowie die Zentralschraube 28 gelöst und die Seeger-Ringe 26 gezogen werden, bevor das komplette Pumpengehäuse einschließlich des Lagers 8 und des Gehäusedeckels 19 aus der Gehäusewandöffnung 2 heraus und von der Antriebswelle 6 abgezogen werden kann. Da die Antriebswelle 6 im Stillstand durch Getrieberäder oder ein weiteres antriebseitiges Lager abgestützt ist, läßt sich die komplette Pumpen-/Lager-Baugruppe beim Wiedereinbau leicht einschieben, ohne daß am Getriebegehäuse eine weitere Gehäusewandöffnung 2 benötigt wird, um durch sie die Antriebswelle 6 in die Öffnung des Lagers 8 einzuführen.

## Patentansprüche

1. Pumpenanordnung in einem Getriebe,
- in welchem eine integrierte Pumpe (3) und ein Anschlußteil (12) für einen Nebenabtrieb (14) mit einer gemeinsamen Antriebswelle (6) umlaufen,
- an deren freiem Ende (9) ein gemeinsames Lager (8) angeordnet ist,
- welches zusammen mit dem Anschlußteil (12) des Nebenabtriebs (14) von einem Gehäusedeckel (19) des Getriebes fixiert ist,
dadurch **gekennzeichnet,**
- daß das Anschlußteil (12) sowohl für die Mitnahme eines Nebenabtriebs (14) als auch des Pumpenrotors (16) eingerichtet ist
- und gehäuseseitig beide gemeinsam vom dicht in einer Gehäusewandöffnung (2) des Getriebes eingepaßten und mit einem das Lager (8) tragenden Lagerhals (7) versehenen Pumpenstator (3) umgeben sind,
- dessen Zu- und Ableitungen (4, 5) unmittelbar radial in die die Gehäusewandöffnung (2) umgebende Gehäusewand (1) übertreten,
- während der Gehäusedeckel (19), der eine Mittenöffnung (21) für das Anschlußteil (12) aufweist, den Pumpenstator (3) auf der abtriebseitigen Stirnseite überdeckt.

2. Anordnung nach Anspruch 1, dadurch **gekennzeichnet,** daß das Anschlußteil (12) abtriebseitig über ein weiteres Lager (22) am Gehäusedeckel (19) abgestützt ist.

3. Anordnung nach Anspruch 1, dadurch **gekennzeichnet,** daß der Gehäusedeckel (19) mittels Radialdichtungen (18) in die Gehäusewandöffnung (2) eingedichtet ist.

4. Anordnung nach Anspruch 1, dadurch **gekennzeichnet,** daß der Pumpenstator (3) mittels Axialdichtungen gegen den Gehäusedeckel (19) abgedichtet ist.

5. Anordnung nach Anspruch 1, dadurch **gekennzeichnet,**
- daß das Anschlußteil (12) als Hohlwelle mit einem einen Pumpenrotor (16) mitnehmenden Außenprofil (15) und einem dem Nebenabtrieb (14) zugeordneten Innenprofil gestaltet ist,
- welches antriebsseitig mit einem Außenprofil auf dem freien Ende der Antriebswelle (6) in Eingriff steht.

6. Anordnung nach Anspruch 1, dadurch **gekennzeichnet,** daß das Anschlußteil (12) durch eine lösbare Axialabstützung (29) sowohl gegenüber der Antriebswelle (6) als auch gegenüber dem ihm auf derselben antriebsseitig vorgeordneten Lager (8) festgelegt ist.

7. Anordnung nach Anspruch 1, dadurch **gekennzeichnet,** daß der Pumpenstator (3) axial am Gehäusedeckel (19) befestigt ist, so daß nach dessen Lösung von der Gehäusewand (1) und der Entfernung der Axialabstützung (29) des Anschlußteiles (12) dieses mitsamt Pumpenrotor (16), Pumpenstator (3) und Lager (8) vom freien Ende der Antriebswelle (6) abziehbar und aus der Gehäusewandöffnung (2) unzerlegt herausziehbar ist.

## Claims

1. Pump arrangement in a gearbox,
- in which an integrated pump (3) and a connector (12) for a power take-off (14) rotates with a common drive shaft (6),
- on whose free end (9) a common bearing (8) is mounted,
- which is fixed together with the connector (12) of the power take-off (14) by a housing cover (19) of the gearbox,
characterised in that
- the connector (12) is contrived to drive both a power take-off (14) and the pump rotor (16),
- and on the housing side, both are jointly surrounded by the pump stator (3), which fits tightly into a housing wall aperture (2) of the gearbox and is provided with a bearing journal (7) carrying the bearing (8),
- whose supply and discharge pipes (4, 5) pass directly radially into the housing wall (1) surrounding the housing wall aperture (2),
- whilst the housing cover (19), which has a central aperture (21) for the connector (12), covers the pump stator (3) at the power take-off end.

2. Arrangement according to claim 1, characterised in that the connector (12) bears on the housing cover (19) on the output side via a further bearing (22).

3. Arrangement according to claim 1, characterised in that the housing cover (19) is sealed into the housing wall aperture (2) by means of radial seals (18).

4. Arrangement according to claim 1, characterised in that the pump stator (3) is sealed with respect to the housing cover (19) by means of axial seals.

5. Arrangement according to claim 1, characterised in that
- the connector (12) is formed as a hollow shaft with an external profile (15) driving a pump rotor (16) and with an internal profile associated with the power take-off (14),
- which is in engagement on the input side with an external profile on the free end of the drive shaft (6).

6. Arrangement according to claim 1, characterised in that the connector (12) is fixed by a detachable axial support (29) both relative to the drive shaft (6) and relative to the bearing (8) disposed on the input side of said shaft (6) in front of said connector (12).

7. Arrangement according to claim 1, characterised in that the pump stator (3) is fixed axially to the housing cover (19) so that, after its detachment from the housing wall (1) and removal of the axial support (29) of the connector (12), the connector can be pulled off the free end of the drive shaft (6) together with the pump rotor (16), the pump stator (3), and the bearing (8), and can be taken out of the housing wall aperture (2) without dismantling.

## Revendications

1. Agencement de pompe dans une transmission dans laquelle une pompe intégrée (3) et un élément de raccordement (12) pour une sortie auxiliaire (14) tournent avec un arbre d'entraînement commun (6) sur l'extrémité libre (9) duquel est agencé dans un palier commun (8) qui est fixé en même temps que l'élément de raccordement (12) de la sortie auxiliaire (14) par un couvercle de carter (19) de la transmission,
caractérisé en ce que :
- l'élément de raccordement (12) est aménagé pour l'entraînement tant d'une sortie auxiliaire (14) qu'aussi du rotor de la pompte (16)
- et, du côté du carter, les deux sont entourés en commun par le stator de la pompe (3) qui est emboîté de façon étanche dans une ouverture de paroi du carter (2) de la transmission et est pourvu d'un collet de palier (7) portant le palier (8) et dont les conduites d'entrée et d'évacuation (4,5) passent directement radialement dans la paroi de carter (1) qui entoure l'ouverture de paroi du carter (2), tandis que le couvercle de carter (19) qui présente une ouverture médiane (21) pour l'élément de raccordement (12) recouvre le stator de la pompe (3) du côté frontal, du côté de la sortie.

2. Agencement suivant la revendication 1, caractérisé en ce que l'élément de raccordement (12) est soutenu du côté de la sortie par un autre palier (22) dans le couvercle de carter (19).

3. Agencement suivant la revendication 1, caractérisé en ce que le couvercle de carter (19) est rendu étanche dans l'ouverture de paroi de carter (2) au moyen de garnitures d'étanchéité radiales (18).

4. Agencement suivant la revendication 1, caractérisé en ce que le stator de pompe (3) est rendu étanche par rapport au couvercle de carter (19) au moyen de garnitures d'étanchéité axiales.

5. Agencement suivant la revendication 1, caractérisé en ce que l'élément de raccordement (12) est développé sous la forme d'un arbre creux avec un profil externe (15) entraînant un rotor de pompe (16) et avec un profil interne qui est adjoint à la sortie auxiliaire (14) et qui est en prise du côté de l'entraînement avec un profil externe sur l'extrémité libre de l'arbre d'entraînement (6).

6. Agencement suivant la revendication 1, caractérisé en ce que l'élément de raccordement (12) est fixé, par un appui axial (29) détachable, tant par rapport à l'arbre d'entraînement (6) qu'aussi par rapport au palier (8) disposé avant lui sur cet arbre du côté de l'entraînement.

7. Agencement suivant la revendication 1, caractérisé en ce que le stator de pompe (3) est fixé axialement au couvercle du carter (19) de façon qu'après la libération de ce dernier de la paroi de carter (1) et après la suppression de l'appui axial (29) de l'élément de raccordement (12) cet élément, avec rotor de pompe (16), stator de pompe (3) et palier (8), peut être retiré de l'extrémité libre de l'arbre d'entraînement (6) et peut être extrait, non démonté, de l'ouverture de paroi du carter (2).
